# EUROPÄISCHE PATENTANMELDUNG

(11) **EP 1 258 704 A2**
(43) Veröffentlichungstag der Anmeldung: **20.11.2002**
(21) Anmeldenummer: 02009646.7
(22) Anmeldetag: 27.04.2002
(51) Int. Cl.: G01C 15/02

(54) **Markiervorrichtung zum Anbringen von Markierungen an einer Fläche**

(30) Priorität: 17.05.2001 DE 10124110
(71) Anmelder: ROBERT BOSCH GMBH, 70442 Stuttgart (DE)
(72) Erfinder: Pidoux, Raymond, 1313 Ferreyres (CH)

(57) **Zusammenfassung**

Die Erfindung bezieht sich auf eine Markiervorrichtung zum Anbringen von Markierungen an einer Fläche (8), insbesondere an Positionen, die durch die Lichtsignale einer in einem Abstand von der Fläche (8) angeordneten Lichtquelle, vorzugsweise eines Lasers, vorgegeben sind, wobei die Markiervorrichtung ein Markierelement (1) enthält, wobei aus dem Markierelement (1) ein elektrostatisch geladenes Pulver (13) austritt und das elektrostatisch geladene Pulver (13) die Markierungen auf der Fläche (8) bildet.

## Beschreibung

### Technisches Gebiet

In der Bauindustrie, im Elektro- und Installationshandwerk kommen häufig Baulaser zum Einsatz. Sie dienen als Hilfsmittel für Ausmess-, Positionier- und Markiervorgänge. Mit Hilfe von Baulasern können auf Wänden, Decken und Böden horizontale und vertikale Linien festgelegt oder im Raum horizontal oder vertikal verlaufende Ebenen exakt definiert werden. Die gewünschte Position z.B. eines Befestigungspunktes kann mittels eines gebündelten Laserstrahls auf eine Fläche projiziert werden. Linien können auf die in einem Abstand vom Laser befindliche Fläche projiziert werden, indem der Laserstrahl periodisch rotiert oder abgelenkt wird. Die Linien sind beispielsweise als Begrenzungen von gekachelten Flächen, für die Bestimmung eines exakt horizontalen Verlaufs von Leitungen oder für das Ausrichten der Ausbrüche für Türen und Fenster erforderlich. Der Laserstrahl hinterläßt keine bleibende Markierung auf der jeweiligen Fläche. Eine bleibende Markierung muß manuell (z.B. mit Kreide) oder automatisch mit einem Markierwerkzeug an der Fläche angebracht werden.

### Stand der Technik

DE 197 57 461 A1 betrifft einen Baulaser mit einer innerhalb eines Gerätegehäuses angeordneten Laserlichtquelle für die Erzeugung von sichtbarer Laserstrahlung, die um eine Drehachse rotierbar ist. Des weiteren umfaßt der Baulaser eine Stellglieder aufweisende Nivelliereinrichtung für die Ausrichtung der Drehachse der Laserstrahlung in Abhängigkeit von einer von Neigungssensoren erfaßten Lage der Drehachse.

DE 196 34 800 A1 bezieht sich auf eine Vorrichtung zum Anbringen von Markierungen an Flächen, insbesondere an Wänden und Decken, beispielsweise im Bauwesen oder in der Haustechnik. Die Vorrichtung enthält eine lichtelektrische Detektoranordnung zum Detektieren von gebündelten Lichtsignalen einer im Abstand von der Fläche angeordneten Lichtquelle, vorzugsweise eines Lasers. Ferner enthält sie eine signalerzeugende Positionierhilfe, die mit der Detektoranordnung zusammenwirkt, um dem Anwender ein Positionieren der Vorrichtung an der Fläche nach Maßgabe der detektierten Lichtsignale zu ermöglichen. Die Vorrichtung umfaßt außerdem eine Markiereinrichtung, mittels der bei korrekter Positionierung der Vorrichtung eine Markierung an der Fläche anbringbar ist. Die Markiereinrichtung umfaßt vorzugsweise eine Spritzvorrichtung für ein Markiermedium, beispielsweise Tinte, Tusche oder dergleichen.

DE 199 02 075 A1 bezieht sich auf ein Markierwerkzeug zum Anbringen von Markierungen an Oberflächen, insbesondere von Positionsmarkierungen an zu bearbeitenden Wänden oder Decken von Gebäuden. Das Markierwerkzeug enthält ein Mittel zum Anbringen einer Markierung an einer Oberfläche, wobei das Mittel mit einem lichtempfindlichen Element zu einer Einheit verbunden ist. Ferner umfaßt das Markierwerkzeug eine Steuereinrichtung, die mit dem lichtempfindlichen Element und dem Mittel zum Anbringen einer Markierung in funktioneller Beziehung steht, um letzteres zu betätigen, wenn das lichtempfindliche Element einen Lichtstrahl erfasst. Das Mittel zum Anbringen einer Markierung umfasst vorzugsweise eine Schreibspitze, die durch eine Düse zum Abgeben von Farbpulver oder Tinte gebildet ist.

DE 198 11 085 A1 betrifft ein Vorrichtung zum Auftragen von elektrostatisch aufgeladenem Pulver auf einem geerdeten, elektrisch leitfähigen Gegenstand. Wird die Vorrichtung nahe genug an eine zu beschichtende Oberfläche eines Gegenstandes gebracht, so tritt aufgrund der elektrostatischen Anziehungskraft zwischen dem geerdeten, elektrisch leitfähigen Gegenstand und den elektrostatisch aufgeladenen Pulverpartikeln Pulver aus der Pulveraustrittsöffnung aus und gelangt auf die Oberfläche.

### Darstellung der Erfindung

Die vorliegende Erfindung offenbart eine Markiervorrichtung zum Anbringen von Markierungen an einer Fläche. Die Markierungen werden insbesondere an Positionen angebracht, die durch die Lichtsignale einer in einem Abstand von der Fläche angeordneten Lichtquelle vorgegeben sind. Bei der Lichtquelle handelt es sich vorzugsweise um einen Laser. Die Markiervorrichtung enthält ein Markierelement, aus dem erfindungsgemäß ein elektrostatisch geladenes Pulver austritt. Das elektrostatisch geladene Pulver bildet die Markierungen auf der Fläche.

Vorteilhaft ist dabei, daß die erfindungsgemäße Markiervorrichtung Markierungen auf einer Wand oder einer beliebigen anderen Oberfläche, unabhängig von ihrem Zustand, anbringen kann. Es kann sich um eine glatte oder eine rauhe Oberfläche aus verschiedenen Materialien handeln. Durch die elektrostatische Ladung weist das Pulver eine gute Haftung auf. Es kann jedoch, ähnlich wie eine Kreidemarkierung, leicht wieder entfernt werden. Ein weiterer Vorteil des elektrostatisch geladenen Pulvers gegenüber flüssiger Farbe ist, daß die Markierung direkt nach ihrem Anbringen fertig ist, also nicht trocknen muss und nicht so leicht verschmiert. Die Markierungen können ferner an einer Oberfläche, unabhängig von ihrer Orientierung, angebracht werden. Die elektrostatische Ladung des Pulvers bewirkt eine Haftung der Markierungen auch auf der Decke, den Seitenwänden oder den schrägen Flächen eines Raumes. Denkbar ist weiterhin, daß die Pulvermarkierungen durch Erhitzen permanent gemacht werden.

Die Pulverteilchen werden durch zwei verschiedene Kraftwirkungen zu der zu markierenden Fläche transportiert. Dies sind einerseits aerodynamische Kräfte aufgrund der Strömungsgeschwindigkeit des aus dem Markierelement austretenden Pulverstrahls und andererseits elektrische Kräfte aufgrund des Feldes zwischen dem Markierelement und der (geerdeten) zu markierenden Oberfläche. Die auf der zu markierenden Oberfläche auftreffenden Pulverteilchen geben aufgrund ihrer sehr geringen Leitfähigkeit ihre Ladung nur langsam ab. Durch Influenz oder Polarisation werden in der markierten Oberfläche entgegengesetzte Ladungen erzeugt, welche das Festhalten der Pulverteilchen aufgrund Coulomb'scher Anziehungskräfte bewirken. Auch nach ihrer Entladung bleiben die Pulverteilchen aufgrund von van der Waals-Kräften an der markierten Fläche haften.

Die erfindungsgemäße Markiervorrichtung bringt Markierungen insbesondere an Positionen an, die durch die Lichtsignale einer in einem Abstand von der Fläche angeordneten Lichtquelle vorgegeben sind. Die Lichtquelle ist vorzugsweise ein Baulaser. Der Abstand eines Baulasers von der zu markierenden Fläche beträgt üblicherweise einige Zentimeter bis zu einigen Metern, vorzugsweise 0,2 bis 5m.

In einer bevorzugten Ausrührungsform der erfindungsgemäßen Markiervorrichtung erfaßt ein lichtempfindliches Element die Lichtsignale und an den durch die Lichtsignale vorgegebenen Positionen auf der zu markierenden Fläche wird automatisch das Markierelement betätigt. Bei hellen Lichtverhältnissen und großen Entfernungen reicht die Laserstrahlleistung oft nicht aus, den projizierten Punkt bzw. die projizierte Linie der zu markierenden Fläche sichtbar zu machen. Zur Abhilfe dient das lichtempfindliche Element, das den Laserstrahl mit Hilfe von Photodioden registriert. Ferner dient das lichtempfindliche Element zur Positionierung des Markierelements. Es kann beispielsweise mit einer Positionierhilfe verbunden sein, die dem Anwender mitteilt, in welche Richtung er das Markierelement bewegen muss, um seine Mittenposition exakt mit dem Lichtsignal zur Übereinstimmung zu bringen oder es kann eine automatische Verschiebung des Markierelements auf die Lichtsignalposition veranlassen. Die Betätigung des Markierelements, wenn es sich in der korrekten Position befindet, kann dann automatisch oder manuell erfolgen.

Weiterhin betrifft die Erfindung die Verwendung der erfindungsgemäßen Markiervorrichtung, wobei das elektrostatisch geladene Pulver durch zwei Plattenpaare so abgelenkt wird, daß Markierungen in Form von Zeichen, Symbolen, Buchstaben oder Zahlen an der Fläche angebracht werden.

Ferner betrifft die Erfindung die Verwendung eines Markierelements zum Anbringen von Markierungen an einer Fläche, wobei aus dem Markierelement elektrostatisch geladenes Pulver austritt und das Pulver die Markierungen auf der Fläche bildet. In einer bevorzugten Verwendungsform werden die Positionen der Markierungen durch einen Baulaser vorgegeben.

Weiterhin betrifft die Erfindung die Verwendung von elektrostatisch geladenem Pulver zum Anbringen von Markierungen an einer Fläche, wobei die Positionen der Markierungen durch einen Baulaser vorgegeben werden.

### Zeichnung

Anhand der Zeichnung wird die Erfindung nachstehend näher erläutert.

### Es zeigt:

- Figur 1: Den schematischen Aufbau und die Funktionsweise eines erfindungsgemäßen Markierelements und
- Figur 2: den schematischen Aufbau und die Funktionsweise eines erfindungsgemäßen Markierelements mit Ablenkplatten.

### Ausführungsvarianten

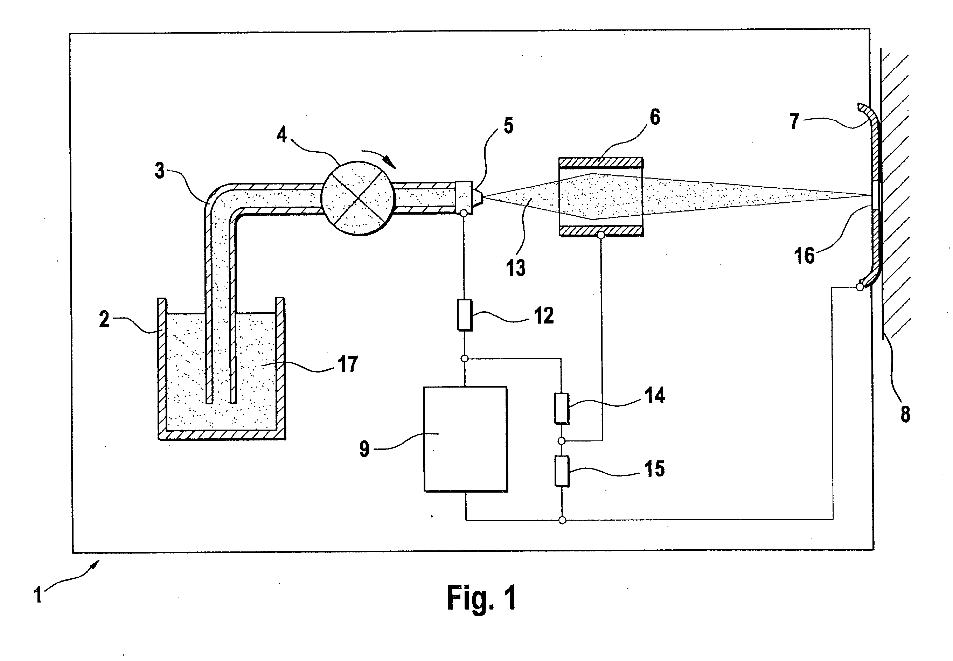

Figur 1 zeigt den prinzipiellen Aufbau eines Markierelements. Das Markierelement 1 ist auf einem Schlitten befestigt, der manuell verfahren werden kann. Das ungeladene (neutrale) Pulver 17 befindet sich in einem Pulverbehälter 2. Von dort aus wird das ungeladene Pulver 17 durch ein Rohr 3 mittels eines Zufuhrsystems 4 zu einer Düse 5 transportiert. Die Düse 5 ist über einen Widerstand 12 mit einer Hochspannungsquelle 9 verbunden. Die Hochspannung liegt an Elektroden in der Düse 5 an und dient zur Hochspannungsaufladung des ungeladenen Pulvers 17 in der Düse 5. Aus der Düse entweicht ein divergenter Strahl von elektrostatisch geladenem Pulver 13. Der Pulverstrahl wird mit Hilfe einer elektrischen Linse fokussiert, so daß der Pulverstrahl mit punktförmigem Querschnitt auf die zu markierende Fläche 8 trifft. Die Spannungsversorgung der elektrischen Linse 6 erfolgt über zwei Widerstände 14 und 15, die parallel zur Hochspannungsquelle 9 als Spannungsteiler geschaltet sind. Direkt an der zu markierenden Fläche 8 befindet sich eine geerdete Platte 7. Das elektrostatische geladene Pulver 13 wird durch die Potentialdifferenz zwischen der Düse 5 und der geerdeten Platte 7 zu der Platte 7 hin beschleunigt. In der geerdeten Platte 7 befindet sich eine Aussparung 16, durch die das elektrostatisch geladene Pulver 13 auf die zu markierende Fläche 8 gelangt. Dort entsteht eine punktförmige Markierung. Durch Verschieben des Markierelements 1 entlang der zu markierenden Fläche 8 entstehen linienförmige Markierungen.

Das Markierelement 1 umfasst demnach in dieser Ausführungsvariante einen Pulverbehälter 2, ein geeignetes ungeladenes Pulver 17, eine Hochspannungsquelle 9, eine Düse 5, in der das ungeladene Pulver 17 elektrostatisch aufgeladen wird, ein Zuführsystem 4, das das ungeladene Pulver 17 von dem Pulverbehälter 2 durch die Düse 5 transportiert und eine elektrische Linse 6 zur Fokussierung des elektrostatisch geladenen Pulvers 13. In dem Pulverbehälter 2 befindet sich ein Vorrat an geeignetem ungeladenem Pulver 17. Unter einem geeigneten ungeladenen Pulver 17 versteht man in diesem Zusammenhang ein trockenes pulverförmiges Material mit geringer Leitfähigkeit. Bevorzugt wird ein Kunststoffpulver, besonders bevorzugt ein Polyester- oder ein Polyurethanpulver verwendet. Pulver dieser Art finden in der Metallindustrie Anwendung bei der Pulverbeschichtung zur Lackierung von Werkstücken. Sie sind deshalb im Großhandel erhältlich.

In der Düse 5 findet bevorzugt eine Hochspannungs- und/oder eine Reibungsaufladung des ungeladenen Pulvers 17 statt. Im Stande der Technik erfolgt die Pulveraufladung bei elektrostatischen Pulversprühpistolen zumeist durch außenliegende Hochspannungselektroden, sogenannten Korona-Elektronen. Es existieren beispielsweise Einelektroden- und Vierelektroden-Systeme, bei denen durch Hochspannungen an den Elektroden innerhalb der Pistole ein elektrisches Feld vorliegt, das die Pulverteilchen passieren. Es sind aber auch bereits Pulversprühpistolen verfügbar, die das Pulver ausschließlich durch Reibungsprozesse aufladen und demnach ohne Hochspannungserzeuger arbeiten. Eine interessante Weiterentwicklung stellen Pulversprühpistolen mit kombinierter Reibungs- und Hochspannungsaufladung dar. Bei elektrostatischen Pulversprühpistolen mit kombinierter Reibungs- und Hochspannungsaufladung findet die reibungselektrische Aufladung des Pulvers bei einer hohen Strömungsgeschwindigkeit in einer Verengung des Sprührohrquerschnitts statt. Zusätzlich wird innerhalb des Pulverkanals durch entsprechende Anordnung von Hochspannungs- und Erdelektroden ein der Pulverströmung entgegengerichtetes Feld erzeugt, wodurch eine Hochspannungsaufladung des Pulvers erfolgt.

Das Zufuhrsystem 4 transportiert das ungeladene Pulver 17 in vorteilhafter Weise mittels Druckluft. Andere Transportmechanismen sind jedoch ebenso denkbar. Die Hochspannungsquelle 9 erzeugt bevorzugt eine Spannung von 40-100kV, besonders bevorzugt 2-100kV. Die Spannung dient zur Hochspannungsaufladung des ungeladenen Pulvers 17.

Die geerdete Platte 7 enthält die eine Aussparung 16, durch die das elektrostatisch geladene Pulver 13 auf die zu markierende Fläche 8 gelangt. Die geerdete Platte 7 soll direkt an der zu markierenden Fläche 8 plaziert werden, um dort für ein Potential von 0V zu sorgen. Dadurch ergibt sich die erforderliche Potentialdifferenz zwischen der Düse 5 und der zu markierenden Fläche 8, durch die das elektrostatisch geladene Pulver 13 zu der Fläche 8 hin beschleunigt wird. Handelt es sich um eine leitende Fläche, so kann die Fläche 8 selbst geerdet werden und eine geerdete Platte 7 ist dann überflüssig.

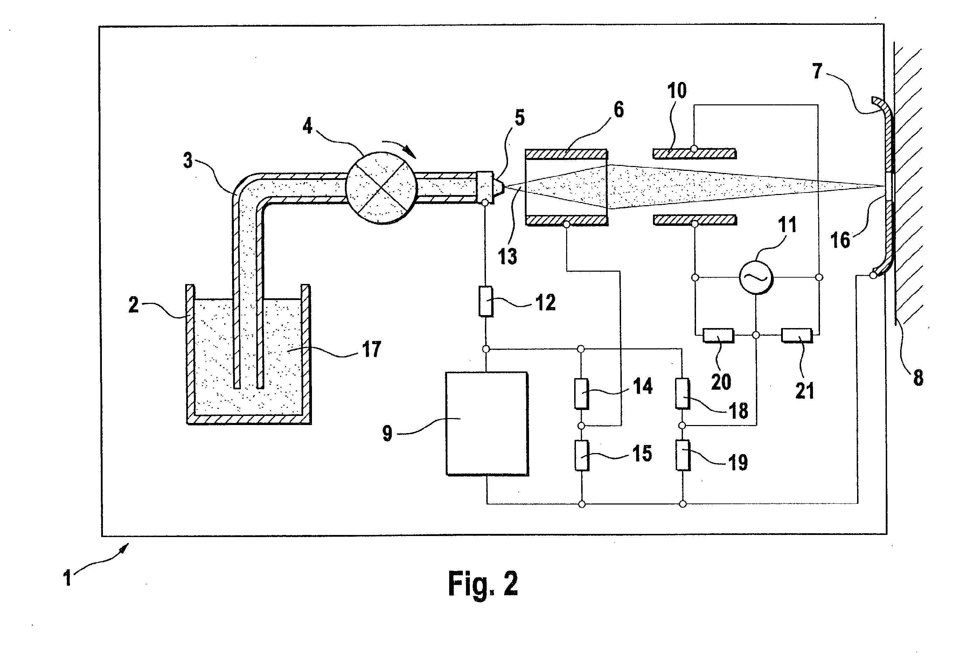

Figur 2 zeigt den schematischen Aufbau und die Funktionsweise eines erfindungsgemäßen Markierelements mit Ablenkplatten. Das Markierelement 1 umfaßt (wie in Figur1) einen Pulverbehälter 2, gefüllt mit ungeladenem (neutralem) Pulver 17, ein Rohr 3, ein Zufuhrsystem 4, eine Düse 5, die an eine Hochspannungsquelle 9 angeschlossen ist, eine geerdete Platte 7 und eine elektrische Linse 6. Aus der Düse 5 entweicht ein Strahl elektrostatisch geladenen Pulvers 13, das, nachdem es die elektrische Linse 6 passiert hat, zwischen ein Plattenpaar 10 gelangt.

Das Plattenpaar 10 ist an den Spannungsgenerator 11 angeschlossen. Der elektrostatisch geladene Pulverstrahl 13 wird in dem elektrischen Feld zwischen dem Plattenpaar 10 in Abhängigkeit von der Spannung des Spannungsgenerators 11 abgelenkt. Die Widerstände 18 und 19 dienen zur Bestimmung des Mittelpotentials des Plattenpaars 10. Die gleichwertigen Widerstände 20 und 21 dienen zur symmetrischen Verteilung der Spannung des Spannungsgenerators 11 um das Mittelpotential.

Um mit dem Pulverstrahl Zeichen, Symbole, Buchstaben, Zahlen usw. nachzufahren, ist es notwendig, zwei Plattenpaare zu verwenden, die um 90° versetzt sind. Das Feld zwischen einem Plattenpaar 10 kann den Pulverstrahl in y-Richtung, zwischen dem anderen Plattenpaar (nicht in Figur 2 dargestellt) in x-Richtung ablenken.

Das erfindungsgemäße Markierelement 1 umfasst demnach in dieser Ausführungsvariante zwei um 90° zueinander versetzte Plattenpaare 10, an die Spannungen angelegt werden, um das elektrostatisch geladene Pulver 13 abzulenken. Dadurch ergibt sich der Vorteil, dass der geladene Pulverstrahl z.B. so gelenkt werden kann, daß Markierungen in Form von Zeichen, Symbolen, Buchstaben, Zahlen usw. angebracht werden können, ohne das Markierelement 1 selbst zu bewegen. Die Größe der Aussparung 16 in der geerdeten Platte 7 wird dabei so gewählt, daß die Markierungen ohne eine Bewegung der geerdeten Platte 7 angebracht werden können. Die Aussparung 16 ist demnach ein wenig größer als die Markierungen in Form von Zeichen, Symbolen, Buchstaben, Zahlen usw..

Die erfindungsgemäßen Plattenpaare 10 sind um 90° zueinander versetzt angeordnet, um sowohl eine Ablenkung des Pulverstrahls in x-Richtung, als auch in y-Richtung zu ermöglichen. Die Richtung der Ablenkung (und damit die Spannungen an den Plattenpaaren 10) wird beispielsweise durch einen Laserstrahl vorgegeben. Die Zielposition der jeweiligen Markierung kann z.B. über ein lichtempfindliches Element erfaßt und über ein Steuergerät in die Ablenkspannungen an den Ablenkplatten 10 umgesetzt werden. Denkbar ist auch, daß bereits vorprogrammierte Zeichen ausgewählt werden können, die auf Wunsch an einer ausgewählten Stelle einer Fläche als Markierungen angebracht werden können.

### Bezugszeichenliste

- 1: Markierelement
- 2: Pulverbehälter
- 3: Rohr
- 4: Zufuhrsystem
- 5: Düse
- 6: elektrische Linse
- 7: geerdete Platte
- 8: zu markierende Fläche
- 9: Hochspannungsquelle
- 10: Plattenpaar
- 11: Spannungsgenerator
- 12: Widerstand
- 13: elektrostatisch geladenes Pulver
- 14: Widerstand
- 15: Widerstand
- 16: Aussparung
- 17: ungeladenes (neutrales) Pulver
- 18: Widerstand
- 19: Widerstand
- 20: Widerstand
- 21: Widerstand

## Patentansprüche

1. Markiervorrichtung zum Anbringen von Markierungen an einer Fläche (8), insbesondere an Positionen, die durch die Lichtsignale einer in einem Abstand von der Fläche (8) angeordneten Lichtquelle, vorzugsweise eines Lasers, vorgegeben sind, wobei die Markiervorrichtung ein Markierelement (1) enthält, **dadurch gekennzeichnet, daß** aus dem Markierelement (1) ein elektrostatisch geladenes Pulver (13) austritt und das elektrostatisch geladene Pulver (13) die Markierungen auf der Fläche (8) bildet.

2. Markiervorrichtung gemäß Anspruch 1, **dadurch gekennzeichnet, daß** die Lichtquelle ein Baulaser ist.

3. Markiervorrichtung gemäß Anspruch 1, **dadurch gekennzeichnet, daß** ein lichtempfindliches Element die Lichtsignale erfasst und an den durch die Lichtsignale vorgegebenen Positionen automatisch oder manuell das Markierelement (1) betätigt wird.

4. Markiervorrichtung gemäß Anspruch 1, **dadurch gekennzeichnet, daß** das Markierelement (1) einen Pulverbehälter (2), ein geeignetes ungeladenes Pulver (17), eine Hochspannungsquelle (9), eine Düse (5), in der das ungeladene Pulver (17) elektrostatisch aufgeladen wird, ein Zufuhrsystem (4), das das ungeladene Pulver (17) von dem Pulverbehälter (2) durch die Düse (5) transportiert und eine elektrische Linse (6) zur Fokussierung des elektrostatisch geladenen Pulvers (13) umfaßt.

5. Markiervorrichtung gemäß Anspruch 4, **dadurch gekennzeichnet, daß** das ungeladene Pulver (17) ein Kunststoffpulver ist.

6. Markiervorrichtung gemäß Anspruch 5, **dadurch gekennzeichnet, daß** das Kunststoffpulver ein Polyester- oder ein Polyurethanpulver ist.

7. Markiervorrichtung gemäß Anspruch 4, **dadurch gekennzeichnet, daß** das Zufuhrsystem (4) das ungeladene Pulver (17) mittels Druckluft transportiert.

8. Markiervorrichtung gemäß Anspruch 4, **dadurch gekennzeichnet, daß** die Hochspannungsquelle (9) eine Spannung von 40 bis 100kV erzeugt.

9. Markiervorrichtung gemäß Anspruch 4, **dadurch gekennzeichnet, daß** in der Düse (5) eine Hochspannungs- und/oder eine Reibungsaufladung des ungeladenen Pulvers (17) stattfindet.

10. Markiervorrichtung gemäß Anspruch 4, **dadurch gekennzeichnet, daß** das Markierelement (1) eine geerdete Platte (7) umfaßt, die eine Aussparung (16) enthält, durch die das elektrostatisch geladene Pulver (13) auf die zu markierende Fläche (8) gelangt.

11. Markiervorrichtung gemäß Anspruch 4, **dadurch gekennzeichnet, daß** das Markierelement (1) zwei um 90° zueinander versetzte Plattenpaare (10) umfaßt, an die Spannungen angelegt werden, um das elektrostatisch geladene Pulver (13) abzulenken.

12. Verwendung einer Markiervorrichtung gemäß Anspruch 11, **dadurch gekennzeichnet, daß** das elektrostatisch geladene Pulver (13) durch die zwei Plattenpaare (10) so abgelenkt wird, daß Markierungen in Form von Zeichen, Symbolen, Buchstaben oder Zahlen an der Fläche (8) angebracht werden.

13. Verwendung eines Markierelements zum Anbringen von Markierungen (1) an einer Fläche (8), **dadurch gekennzeichnet, daß** aus dem Markierelement (1) elektrostatisch geladenes Pulver (13) austritt und das Pulver (13) die Markierungen auf der Fläche (8) bildet.

14. Verwendung gemäß Anspruch 13, **dadurch gekennzeichnet, daß** die Positionen der Markierungen durch einen Baulaser vorgegeben werden.

15. Verwendung von elektrostatisch geladenem Pulver (13) zum Anbringen von Markierungen an einer Fläche (8), wobei die Positionen der Markierungen durch einen Baulaser vorgegeben werden.
